# EUROPÄISCHE PATENTSCHRIFT

(11) **EP 2 996 214 B1**
(45) Veröffentlichungstag und Bekanntmachung des Hinweises auf die Patenterteilung: **03.10.2018**
(21) Anmeldenummer: 15184231.7
(22) Anmeldetag: 08.09.2015
(51) Int. Cl.: H02G 3/04, H02G 3/06, F16L 3/26

(54) **ALS ADAPTER FÜR EIN KABELTRAGSYSTEM AUSGEFÜHRTER KABELTRAGSEGMENTVERBINDER**
CABLE SUPPORT SEGMENT CONNECTOR AS ADAPTER FOR A CABLE SUPPORT SYSTEM
CONNECTEUR DE SEGMENT DE SUPPORT DE CABLE CONÇU EN TANT QU'ADAPTATEUR POUR SYSTEME DE SUPPORT DE CABLE

(30) Priorität: 15.09.2014 DE 202014104352 U
(43) Veröffentlichungstag der Anmeldung: 16.03.2016
(73) Patentinhaber: OBO Bettermann GmbH & Co. KG, 58710 Menden (DE)
(72) Erfinder: GEHLING, Andreas Große, 58710 Menden (DE); GUTT, Wolfgang, 58708 Menden (DE)
(74) Vertreter: Haverkamp, Jens

(56) Entgegenhaltungen:
- EP-A1- 0 521 536
- EP-A1- 0 578 459
- EP-A1- 0 712 189
- GB-A- 2 267 605
- GB-A- 2 314 216
- GB-A- 2 502 769

## Beschreibung

Die Erfindung betrifft einen Kabeltragsegmentverbinder mit den Merkmalen des Oberbegriffs des Anspruchs 1, welcher als Adapter für ein Kabeltragsystem ausgeführt ist.

Kabeltragsysteme werden eingesetzt, um elektrische Kabel oder andere, insbesondere flexible Installationen in einem Gebäude zu tragen. Ein solches Kabeltragsystem ist aus einer Vielzahl einzelner Kabeltragsegmente zusammengebaut. Je nach Ausbildung des Kabeltragsystems sind deren Kabeltragsegmente als Kabelrinnen oder Kabelleiter konzipiert. Verbunden werden derartige Kabeltragsegmente miteinander typischerweise dadurch, dass diese an ihren Enden jeweils einen Verbindungsabschnitt aufweisen, der mit einem komplementären Verbindungsabschnitt eines weiteren Kabeltragsegmentes verbunden wird. Zwei miteinander zu verbindende Kabeltragsegmente überlappen in aller Regel mit ihren Verbindungsabschnitten. Derartige Kabeltragsegmente verfügen über zwei voneinander durch eine Kabelaufnahme beabstandete Seitenholme. Die Seitenholme verlaufen parallel oder zumindest annähernd parallel zueinander. Aus diesem Grunde können mit ihren Verbindungsabschnitten regelmäßig nur Kabeltragsegmente derselben Breite und typischerweise auch derselben Höhe der Seitenholme miteinander zum Aufbau eines Kabeltragsystems verbunden werden. In einem aus einer Vielzahl derartiger Kabeltragsegmente gebildeten Kabeltragsystem kommen den jeweiligen Anforderungen entsprechend Kabeltragsegmentstrecken zum Einsatz, die eine unterschiedliche Breite aufweisen. Um bezüglich ihrer Breite unterschiedliche Kabeltragsegmente mechanisch aneinander anschließen zu können, werden Übergangssegmente benötigt. Nachteilig ist bei diesem Konzept, dass für die Vielzahl unterschiedlich breit ausgelegter Kabeltragsegmente jeweils eigene Übergangsstücke von der einen Größe zu der anderen benötigt werden.

Die EP 0 578 459 A1 zeigt ein aus Metallblech bestehendes Verbindungsstück zum Verbinden zweier Kabelträger oder Kabelleitern. Das Verbindungsstück weist wenigstens zwei kanalförmige Abschnitte auf, wobei die endseitigen Abschnitte zum Ankoppeln der Kabelträger bzw. -leitern dienen. Jeweils zwei Abschnitte sind hierbei im Winkel zueinander verstellbar, so dass eine Verbindung mit Kabelträgern möglich ist, die in einem beliebigen Winkel aufeinander treffen.

Die EP 0 521 536 A1 zeigt einen Steigkabelträger, der aus einem Metallblech gebildet ist und eine gebogene Basisplatte sowie daran anschließende Seitenwände aufweist, die aus einer Mehrzahl von Wandabschnitten gebildet sind, die von gegenüberliegenden Seiten der Basisplatte ausgehen. Um die Stabilität zu verbessern, sind die Wandabschnitte durch Verstärkungsstreifen verbunden, die z.B. angeschweißt sein können.

Die GB 2 267 605 A zeigt ein Verbindungselement zum Verbinden von Kabelträgern, das aus einem einzelnen Metallblechstück gebildet ist. Das Verbindungselement weist eine Basis sowie zwei gegenüberliegende, von der Basis ausgehende Seitenwände auf. Um die Stabilität des Verbindungselements zu verbessern, ist vorgesehen, dass das Blech im Bereich der Seitenwände derart gebogen ist, dass es eine Doppelwand bildet.

Die GB 2 314 216 A offenbart ein Verbinderstück für Kabelträger oder Kabelleitern, mit zwei parallelen, zueinander beabstandete Seitenelementen, die durch wenigstens ein quer verlaufendes Sprossenelement miteinander verbunden sind. Die Seitenelemente sind hierbei innerhalb ihrer Verlaufsebene gebogen oder abgewinkelt. Um die Verwendung eines Verbinderstücks für innenliegende sowie für außenliegende Kabel zu ermöglichen, ist vorgesehen, dass jedes Sprossenelement parallel zu seiner Längsachse drehbar und in wenigstens zwei unterschiedlichen Positionen an den Seitenelementen fixierbar ist.

Die EP 0 712 189 A1 offenbart Teile eines Kabelträgersystems wie bspw. Kreuzungen oder Eckverbinder, die jeweils aus einem einzigen Blechteil gefertigt sind. Zum Transport können die Teile jeweils in im Wesentlichen flacher Form verpackt sein. Für den Einsatz werden mithilfe vorgeformte Knicklinien Teile des Bleche, die die Seitenwände bilden, gegenüber einer Basis umgeknickt, so dass sie im 90°-Winkel hierzu stehen. Die Enden der Seitenwände werden wiederum durch Kopplungsflächen gebildet, die zum Anschluss eines weiteren Kabelträgers dienen. Ggf. können die Kopplungsflächen wiederum gegenüber den Seitenwänden abgeknickt werden, damit jeweils zwei Kopplungsflächen parallel zueinander ausgerichtet sind.

In GB 2 502 769 A sind Kabeltragsegmentverbinder beschrieben, mit denen unterschiedlich breit ausgelegte Kabeltragsegmente miteinander verbunden werden können. Zum Verbinden zweier benachbarter Kabeltragsegmente werden zwei der in diesem Dokument beschriebenen Verbinder benötigt. Diese werden an die Seitenholme der zu verbindenden Kabeltragsegmente mittels Schrauben angeschlossen. Jeder Verbinder verfügt über mehrere durch eine Lochung bereitgestellte Knickstellen, sodass jeder Verbinder als Verlängerung der Seitenholme der zu verbindenden Kabeltragsegmente an diesen Knickstellen zum Anpassen der unterschiedlichen Breiten der benachbarten Kabeltragsegmente anpassen zu können. Das Besondere an diesen vorbekannten Verbindern ist, dass diese mittig eine Sollbruchstelle aufweisen, an denen der Verbinder in zwei Verbinderteile geteilt werden kann. Dieses ermöglicht die Ausbildung eines Gelenkverbinders.

Auch wenn sich mit den aus GB 2 502 769 A bekannten Verbindern unterschiedlich breit ausgeführte Kabeltragsegmente miteinander verbinden lassen, ist es wünschenswert, wenn die Handhabung bei der Montage vereinfacht werden könnte. Der Erfindung liegt somit die Aufgabe zugrunde, einen Kabeltragsegmentverbinder vorzuschlagen, der diesen Anforderungen genügt.

Gelöst wird diese Aufgabe erfindungsgemäß durch einen Kabeltragsegmentverbinder, bei dem in die Seitenholme der Anschlussabschnitte eine Lochung zum Durchführen von Befestigern für einen mechanischen Anschluss des Verbinders an das daran anzuschließende Kabeltragsegment eingebracht ist oder die Seitenholme der Anschlussabschnitte Rasten und/oder Riegel zum werkzeuglosen Anschließen eines mit komplementären Riegeln und/oder Rasten in seinem Verbindungsabschnitt ausgestatteten Kabeltragsegmentes tragen, bei dem der Einrichteabschnitt zum benachbarten Anschlussabschnitt und zum benachbarten Tragabschnitt durch eine durch eine Materialschwächung definierte Knickstelle in den Seitenholmen begrenzt ist und bei dem der linke und der rechte Seitenholm identisch aufgebaut sind.

Dieser Kabeltragsegmentverbinder ist als eigenes Segment zum Einbau zwischen zwei miteinander zu verbindenden Kabeltragsegmenten ausgeführt. Dieses bringt den Vorteil mit sich, dass dann nur ein einziges Bauteil bei der Montage gehandhabt werden muss. Diese Ausführung des Kabeltragsegmentverbinders bedingt auch, dass der Verbinder ausgelegt sein kann, damit er ohne zusätzliche oder besondere Befestigungsmittel an das freie Ende eines ersten Kabeltragsegmentes beispielsweise für seine Montagefixierung angeschlossen werden kann. Ein solcher Anschluss dient zunächst nicht dem Zweck, die mechanische Stabilität bereitzustellen, sondern lediglich einem Halten des Kabeltragsegmentverbinders an einem bereits montierten Kabeltragsegment bis die vorgesehene dauerhafte mechanische Verbindung erstellt worden ist. Ein solcher Kabeltragsegmentverbinder verfügt über zwei voneinander beabstandete Seitenholme, die die Seitenholme der anzuschließenden Segmente fortführen. Die Seitenholme des Kabeltragsegmentverbinders sind in mehrere Abschnitte gegliedert. An den beiden Enden ist jeweils ein Anschlussabschnitt ausgebildet, die zur Anlage an den Seitenholmen benachbarter Kabeltragsegmente gebracht werden. Die Ausführung dieses Verbinders als eigenständiges Kabeltragsegment erlaubt eine Auslegung des Verbinders mit seinen Anschlussabschnitten, dass diese zum vorläufigen Halten des Verbinders an einem Kabeltragsegment entweder außenseitig oder innenseitig an den Seitenholmen des anzuschließenden Kabeltragsegmentes anliegen. Die Breite des Verbinders im Bereich der Anschlussabschnitte ist zu diesem Zweck vorzugsweise so gewählt oder eingerichtet, dass die Anschlussseitenholmabschnitte mit einer gewissen Vorspannung an den Seitenholmen des anzuschließenden Kabeltragsegmentes anliegen. Durchaus möglich ist es, die Anschlussabschnitte des Verbinders mit einem unteren Flansch und/oder mit einem oberen Flansch oder Auge vorzusehen, durch welche Bestandteile der Seitenholme eines Anschlussabschnittes eine Fixierung an dem benachbarten Kabeltragsegment in Richtung der Höhe der Seitenholme möglich ist.

Die Anschlussabschnitte verfügen über Anschlussmittel zum mechanischen Befestigen des Verbinders an dem benachbarten Kabeltragsegment. Bei diesen Anschlussmitteln kann es sich um eine Lochung handeln, die typischerweise als Lochraster ausgeführt ist und dem Zweck dient, dass Befestiger, wie etwa Schrauben diese und eine komplementäre Lochung in dem Seitenholm des benachbarten Kabeltragsegmentes durchgreifen. Anstelle oder auch zusätzlich zu einer solchen Maßnahme können die Seitenholme der Anschlussabschnitte des Verbinders auch Rasten und/oder Riegel zum werkzeuglosen Anschließen des Verbinders an ein benachbartes Kabeltragsegment verfügen. Es versteht sich, dass in einem solchen Fall das Kabeltragsegment selbst über komplementäre Riegel und/oder Rasten in seinem Verbindungsabschnitt verfügen muss.

Zur Verbindung der beiden Seitenholme des Kabeltragsegmentverbinders dient ein Tragabschnitt. Dieser dient zum Tragen der über den Verbinder geführten Kabel oder anderer Installationen. Aus diesem Grunde verfügt der Tragabschnitt über ein die beiden Seitenholme verbindendes Bauteil. Bei diesem kann es sich um ein Bodenteil handeln, durch das die beiden Seitenholme des Kabeltragsegmentverbinders miteinander verbunden sind. Es ist ausreichend, wenn ein solches, die beiden Seitenholme verbindendes Bodenteil nur eine kurze Erstreckung in Längsrichtung des Verbinders aufweist. Eine solche Ausgestaltung ist bevorzugt, wenn der Verbinder besonders universell eingesetzt werden soll. In einem Ausführungsbeispiel ist daher vorgesehen, dass als Bodenteil eine Sprosse, wie diese bei Kabelleitern üblicherweise eingesetzt sind, Verwendung findet. Ein solches Bodenteil, also: beispielsweise eine solche Sprosse, kann starr an die beiden Seitenholme angeschlossen sein, beispielsweise durch eine Schweißverbindung. Zum Anschließen des Bodenteils an die Seitenholme ist gemäß einer bevorzugten Ausgestaltung vorgesehen, dass die Seitenholme in dem Tragabschnitt oder in einem Teil desselben unterseitig einen zu dem jeweilig anderen Seitenholm abragenden Flansch aufweisen. Vor allem wenn sich dieser über die Länge oder im Wesentlichen über die Länge des Tragabschnittes erstreckt wird hierdurch eine zusätzliche Stabilität in den Seitenholm eingebracht. Auf einen solchen Flansch kann das Bodenteil aufgelegt und mit diesem verbunden werden. Neben einer starren Verbindung ist es bei einer solchen Ausgestaltung ebenfalls möglich, das Bodenteil in der Ebene der Flansche schwenkbar daran zu befestigen, beispielsweise mittels eines Niets. Eine solche Konzeption wird man wählen, wenn eine Einrichtung der Seitenholme des Verbinders zumindest in dem Tragabschnitt auch nicht parallel zueinander möglich sein soll. An den gelenkig ausgelegten Verbindungsstellen können die Seitenholme sodann gegenüber dem Bodenteil verschwenkt werden. Es ist zweckmäßig, wenn diese Gelenkigkeit zwischen dem Bodenteil und den Seitenholmen stramm ausgeführt ist, damit eine eingerichtete Stellung der Seitenholme bei der Handhabung des Kabeltragsegmentverbinders erhalten bleibt. Auch bei einem gelenkigen Anschluss des Bodenteils an die Seitenholme kann anstelle einer Sprosse ein als Platte ausgeführtes Bodenteil verwendet werden. Dieses kann an seiner zu dem jeweiligen Seitenholm weisenden Seite konvex gekrümmt sein. Somit kann bei einer solchen gelenkigen Verbindung der beiden Seitenholme durch das Bodenteil eine Einrichtung des Kabeltragsegmentverbinders in seinem Tragabschnitt vorgenommen werden. Ist als Bodenteil eine Sprosse vorgesehen, kann diese an ihrer zu dem Seitenholm weisenden Seite einen Schrägschnitt aufweisen. An den beiden Enden einer solchen Sprosse sind die Schrägschnitte gegensinnig zueinander angeordnet. Aufgrund der typischerweise gleichartigen Ausgestaltung des Kabeltragsegmentverbinders in seinen Anschlussabschnitten und Einrichteabschnitten braucht eine Verschwenkung der Seitenholme gegenüber dem Bodenteil grundsätzlich nur in eine Richtung möglich zu sein.

Zwischen einem der beiden Anschlussabschnitte und dem Tragabschnitt verfügt der Kabeltragsegmentverbinder über einen Einrichteabschnitt. Bevorzugt ist eine Ausgestaltung, bei der zwischen jedem Anschlussabschnitt und dem zwischen diesen befindlichen Tragabschnitt ein Einrichteabschnitt angeordnet ist. Ein solcher Einrichteabschnitt dient zum Anpassen des benachbarten Anschlussabschnittes an die Anschlussgeometrie des daran anzuschließenden Kabeltragsegmentes. Somit dient der Einrichteabschnitt dazu, die Seitenholmabschnitte des benachbarten Anschlussabschnittes in eine Raumlage zu bringen, damit diese bestimmungsgemäß an die Seitenholme des angrenzenden Kabeltragsegmentes angeschlossen werden können. Damit kommt dem Kabeltragsegmentverbinder eine Adapterfunktion zu, sodass mittels dieses Verbinders Kabeltragsegmente beispielsweise unterschiedlicher Breite durch dieses Kabeltragsegment miteinander verbunden werden können. Das Anpassen an das jeweils benachbarte Kabeltragsegment kann auch eine Anpassung in Bezug auf die Verlaufsrichtung der benachbarten Kabeltragsegmente beinhalten, sodass in einem solchen Fall durch den Einrichteabschnitt der Kabeltragsegmentverbinder als Bogenstück eingerichtet werden kann, was zugleich auch eine Änderung in der Breite der miteinander zu verbindenden Kabeltragsegmente beinhalten kann.

Gemäß der Erfindung ist ein solcher Einrichteabschnitt zum benachbarten Anschlussabschnitt und zum benachbarten Tragabschnitt hin durch eine Knickstelle in den Seitenholmen begrenzt. Die Knickstelle ist ausgeführt, damit die Seitenholme des Verbinders an diesen Stellen quer zu ihrer ebenen Erstreckung durch Biegen verstellt werden können. Die Knickstellen sind ausgeführt, damit bei einer bestimmungsgemäßen Handhabung derselben die Seitenholme des Verbinders nicht zerteilt werden. Typischerweise ist eine solche Knickstelle durch eine Materialschwächung, ausgebildet in der Erstreckung der Höhe des Seitenholms, definiert. Eine solche Materialschwächung kann beispielsweise durch eine darin eingeprägte Nut oder durch eine Lochung bereitgestellt werden. Bereits ein Loch kann eine solche Knickstelle definieren. Dieses kann je nach Höhe des Seitenholms als Langloch ausgeführt sein. Anstelle des Vorsehens eines einzigen Loches zum Definieren einer solchen Knickstelle kann auch eine Lochreihe vorgesehen sein, deren Längserstreckung die Knickachse bildet. Die Länge des den Einrichteabschnitt bildenden Seitenholmabschnittes kann in dem rechten und linken Seitenholm gleich oder auch unterschiedlich sein. Mit einem solchermaßen ausgelegten Einrichteabschnitt kann somit ein Sprung in der Breite der miteinander zu verbindenden Kabeltragsegmente ausgebildet werden. Die maximale Sprungweite wird durch die Länge des Einrichteabschnittes in dem jeweiligen Seitenholm definiert. Sollen geringere Sprungweiten als die maximale Sprungweite realisiert werden, wird der Einrichteabschnitt gegenüber dem Tragabschnitt um einen entsprechend geringeren Winkelbetrag verstellt. In diesem Zusammenhang versteht es sich, dass die maximale Sprungweite erreicht wird, wenn der Einrichteabschnitt gegenüber dem Tragabschnitt um 90° Grad abgewinkelt wird. Eine solche Breitenänderung kann sowohl reduzierend als auch erweiternd in Bezug auf die Breite des Verbinders im Bereich seines Tragabschnittes ausgeführt werden.

In einer Weiterbildung eines solchen Einrichteabschnittes ist vorgesehen, dass in einem Einrichteabschnitt zwischen dem Übergang in den Tragabschnitt bzw. in den Anschlussabschnitt von den Knickstellen ein oder mehrere weitere Knickstellen der vorbeschriebenen Art vorhanden sind.

Aufgrund des zumindest einen Einrichteabschnittes kann somit der als eigenständiges Segment eines Kabeltragsystems vorhandene Kabeltragsegmentverbinder insbesondere vor Ort an die Gegebenheiten angepasst werden. Aus der vorstehenden Beschreibung des als Adapter ausgeführten Kabeltragsegmentverbinders wird ferner deutlich, dass die Variabilität in der Verwendung eines solchen Verbinders deutlich größer ist, wenn dieser zwei Einrichteabschnitte aufweist. Dieses ist daher eine bevorzugte Ausgestaltung des beanspruchten Kabeltragsegmentverbinders.

Mit einem solchen Kabeltragsegmentverbinder lassen sich nicht nur Kabeltragsegmente unterschiedlicher Breite verbinden. Vielmehr ermöglicht das vorbeschriebene Konzept auch die Ausbildung von Bögen oder Bogenabschnitten sowie den Anschluss eines solchen Verbinders seitlich an den Seitenholm eines Kabeltragsegmentes zur Ausbildung eines T-Abzweiges. Zahlreiche weitere Ausgestaltungen sind möglich.

Nachfolgend ist die Erfindung anhand eines Ausführungsbeispiels unter Bezugnahme auf die beigefügten Figuren beschrieben. Es zeigen:
- **Fig. 1:**: in einer perspektivischen Ansicht einen Kabeltragsegmentverbinder gemäß einer ersten Ausgestaltung der beanspruchten Erfindung,
- **Fig. 2:**: der Verbinder der Figur 1 in einem ersten Anwendungsbeispiel,
- **Fig. 3:**: der Verbinder der Figur 1 in einem weiteren Anwendungsbeispiel,
- **Fig. 4:**: der Verbinder der Figur 1 in noch einem weiteren Anwendungsbeispiel,
- **Fig. 5:**: der Verbinder der Figur 1 in einem weiteren Anwendungsbeispiel,

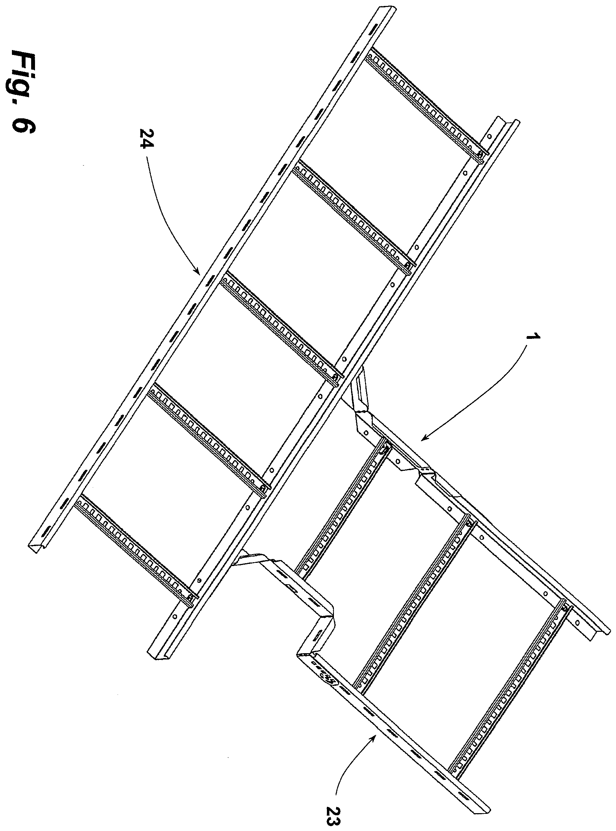

- **Fig. 6:**: der Verbinder der Figur 1 in einem weiteren Anwendungsbeispiel und
- **Fig. 7:**: in einer perspektivischen Ansicht einen Kabeltragsegmentverbinder gemäß einer weiteren Ausgestaltung der beanspruchten Erfindung.

Ein als Adapter ausgeführter Kabeltragsegmentverbinder 1 verfügt über zwei, die Länge des Kabeltragverbinders 1 bestimmende, durchgängige Seitenholme, und zwar einen rechten Seitenholm 2 und einen linken Seitenholm 3. Infolge ihrer Beabstandung fassen bzw. begrenzen die beiden Seitenholme 2, 3 einen zwischen ihnen befindlichen Kabelführungsraum ein. Die Seitenholme 2, 3 sind durch ein als Sprosse 4 dienendes Bodenteil miteinander verbunden.

Der Kabeltragsegmentverbinder 1 ist aufgrund der Konzeption der Seitenholme 2, 3 in fünf aufeinander folgende bzw. nebeneinanderliegende Abschnitte 5 - 9 unterteilt. Die einzelnen Abschnitte 5 - 9 sind voneinander durch Knickstellen getrennt. Diese sind durch die zwischen jeweils zwei benachbarten Abschnitten angeordneten Lochreihen kenntlich gemacht. Die Abschnitte 5 und 9 dienen als Anschlussabschnitte zum mechanischen Anschließen des Verbinders 1 an ein Kabeltragsegment. Diese werden nachfolgend als Anschlussabschnitte angesprochen. Zwischen den beiden Anschlussabschnitten 5, 9 befindet sich ein Tragabschnitt 7. In dem Tragabschnitt 7 befindet sich die Sprosse 4. Die Abschnitte 6 und 8 sind als Einrichteabschnitte ausgelegt.

Die beiden Seitenholme 2, 3 sind identisch aufgebaut. Im Folgenden ist der Seitenholm 3 beschrieben. Diese Ausführungen gelten somit gleichermaßen für den Seitenholm 2. Der Seitenholm 3 ist bezüglich der durch die Sprosse 4 angedeuteten Mitte seines Tragabschnittes spiegelsymmetrisch in Bezug auf die Längserstreckung des Verbinders 1 ausgelegt. Der dem Seitenholm 3 zugehörige Abschnitt, durch den der Anschlussabschnitt 5 mitgebildet ist, ist durch ein Lochraster 10 geprägt. Dieses Lochraster 10 dient zum Durchführen eines oder mehrerer Befestiger, wenn der Kabeltragsegmentverbinder 1 an den Seitenholm eines an diesen anzuschließenden Kabeltragsegments angeschlossen werden soll. Das Lochraster umfasst endseitig zu den Durchbrechungen Öffnungen, sodass dieses Ende als Teil eines Gelenkverbinders eingesetzt werden kann. An dem unteren Abschluss dieses Teils des Seitenholms 3 befindet sich ein in Richtung zu dem Seitenholm 2 abragender Flansch 11. Durch diesen ist der Teil des Seitenholms 3, der den Anschlussabschnitt 5 mitbildet, zum einen stabilisiert. Zum anderen dient der Flansch 11 zum Untergreifen eines Bodenteils oder eines unteren Flansches eines an den Anschlussabschnitt 5 anzuschließenden Kabeltragsegmentes.

Getrennt durch eine Knickstelle K₁ grenzt an den vorbeschriebenen Teil des Seitenholms 3 der Teil des Seitenholms 3, der dem Einrichteabschnitt 6 zugehörig ist. Dieser Teil des Seitenholms 3 trägt unterseitig ebenfalls einen dem Flansch 11 entsprechenden Flansch. Oberseitig verfügt dieser Teil des Seitenholms 3 über ein Auge 13. Die Knickstelle K₁ ist bei dem dargestellten Ausführungsbeispiel durch eine Lochreihe 14 gebildet. Die Lochreihe 14, wobei bei dem dargestellten Ausführungsbeispiel zwei Löcher diese Lochreihe ausbilden, erstreckt sich in Richtung der Höhe des Seitenholms 3 und somit in vertikaler Richtung. Diese Erstreckung definiert die Knickachse an der der dem Anschlussabschnitt 5 zugehörige Teil des Seitenholms 3 gegenüber dem dem Einrichteabschnitt 6 zugehörigen Teil durch Knicken bzw. Biegen verstellt werden kann. Es versteht sich, dass eine solche Verstellung in den Kabelführungsraum hinein oder auch aus diesem heraus möglich ist. Eine zweite Knickstelle K₂ trennt den dem Einrichteabschnitt 6 zugehörigen Teil des Seitenholms 3 von dem Teil, der dem Tragabschnitt 7 zugehörig ist. Die Knickstelle K₂ ist gleichermaßen aufgebaut wie die Knickstelle K₁. Der dem Tragabschnitt 7 zugehörige Anteil des Seitenholms 3 weist unterseitig ebenfalls einen zu dem Seitenholm 2 abragenden Flansch 15 und oberseitig ein Auge 16 auf. Um ein Scharnieren der den unterschiedlichen Abschnitten 5, 6, 7 zugehörigen Teile des Seitenholms 3 in den Kabelführungsraum hinein nicht zu behindern, weisen die Flansche 11, 12, 15 sowie die Augen 13, 16 an ihren zueinander weisenden Seiten jeweils eine Ausklinkung bzw. Freilassung auf. Dadurch ist ein Verstellen des dem Abschnitt 6 zugehörigen Anteils oder des dem Abschnitt 5 zugehörigen Anteils des Seitenholms 3 in den Kabelführungsraum hinein nicht behindert.

Auf dem Flansch 15 ist die Sprosse 4 aufgelegt und daran befestigt. Bei dem dargestellten Ausführungsbeispiel ist die Sprosse 4 mit einer Buckelschweißung mit dem Flansch 15 verbunden. Bei der Sprosse 4 handelt es sich um eine solche, wie diese bei Kabelleitern eingesetzt wird.

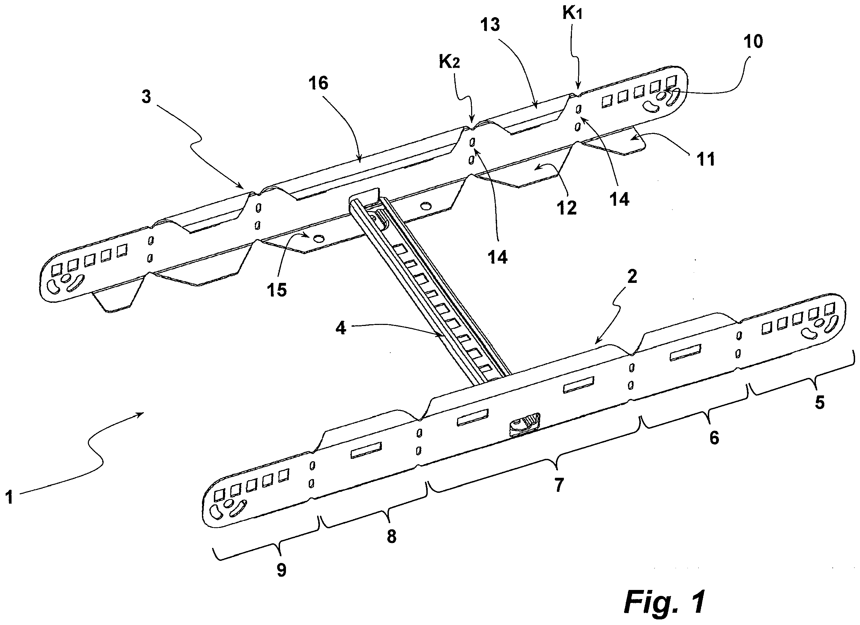

Bei dem in Figur 1 gezeigten Ausführungsbeispiel sind aufgrund der starren Verbindung zwischen der Sprosse 4 und den beiden Teilen der Seitenholme 2, 3 diese Teile der Seitenholme 2, 3 in jedem Fall parallel zueinander gehalten. In seinem Auslieferungszustand sind die Seitenholme 2, 3 des Kabeltragsementverbinders 1 über ihre gesamte Erstreckung parallel.

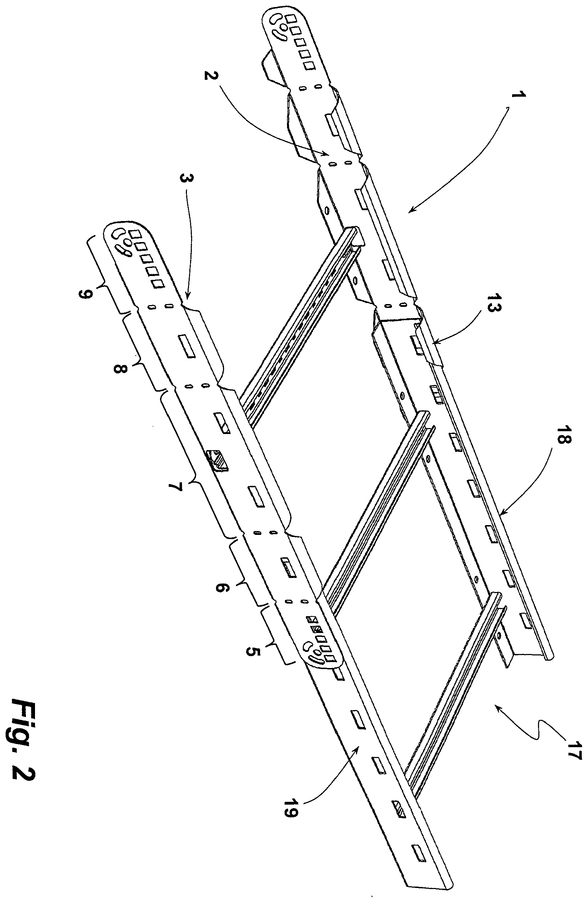

Aufgrund der vorbeschriebenen Konzeption des Verbinders 1 eignet sich dieser auch als Verbinder zum Verbinden von zwei Tragsegmenten gleicher Breite. Figur 2 zeigt den Kabeltragsegmentverbinder 1 in einer solchen Anwendung. Angeschlossen ist an den Kabeltragsegmentverbinder 1 im Bereich seines Anschlussabschnittes 6 ein Kabeltragsegment 17, welches bei dem dargestellten Ausführungsbeispiel als Kabelleiter ausgeführt ist. Das Kabeltragsegment 17 und die in den nachfolgenden Figuren beschriebenen weiteren Kabeltragsegmente sind nur mit einem Abschnitt ihrer Gesamterstreckung gezeigt. Aus dieser Darstellung wird deutlich, dass die den Anschlussabschnitten und den Einrichteabschnitten zugehörigen Flansche 11, 12 unter einen entsprechenden Flansch des Kabeltragsegmentes 17 greifen, während die Augen 13 über die Augen der Seitenholme 18, 19 des Kabeltragsegmentes 17 greifen. Infolge dieser Konzeption bilden die Abschnitte der Seitenholme 2, 3 zwischen sich eine Aufnahme für den Endabschnitt des Kabeltragsegmentes 17. Auf diese Weise ist ein formschlüssiger Anschluss des Kabeltragsegmentes 17 an den Kabeltragsegmentverbinder 1 in Querrichtung zur Längserstreckung bereitgestellt. Zur Fixierung des Verbinders 1 an dem Kabeltragsegment 17 dienen ein oder mehrere ein Loch des Lochrasters 10 durchgreifende Schrauben. Hierdurch wird zugleich eine Fixierung in Längserstreckung des Kabeltragsegmentes 17 erreicht. Gleichzeitig wird durch die vorgenannten Festigungsschrauben eine hinreichende elektrische Kontaktierung zwischen dem Verbinder 1 und dem Kabeltragsegment 17 bereitgestellt, damit das Kabeltragsystem auch den Anforderungen an einen Überspannungsschutzleiter oder auch einen Erdleiter genügt.

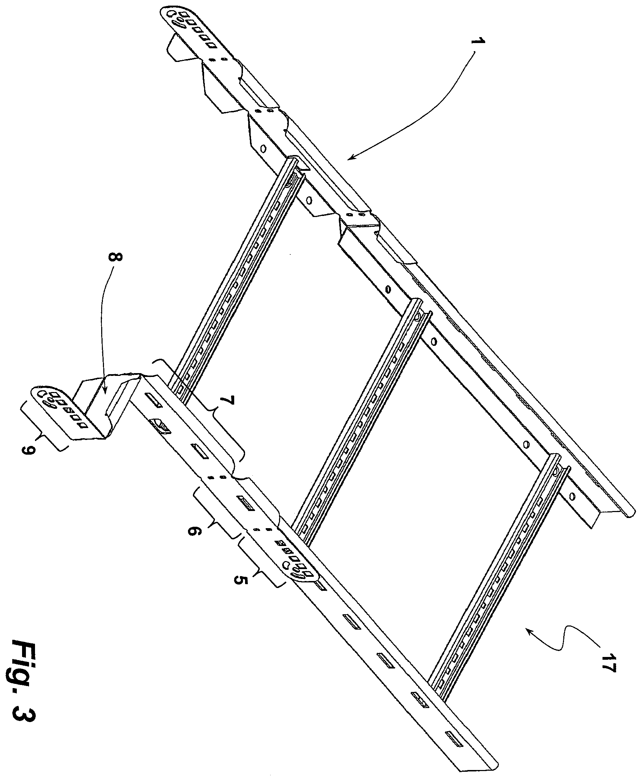

Ist ein Anschluss an einem der beiden Anschlussabschnitte 5, 9 des Kabeltragsegmentverbinders 1 mit einer anderen Breite vorgesehen, beispielsweise mit einer größeren Breite, kann der Seitenholm 2 oder 3 an den Knickstellen K₁, K₂ entsprechend eingerichtet werden, wobei der Einrichteabschnitt des diesbezüglichen Seitenholms 2 oder 3 die Sprungweite bzw. die Änderung in der Breite des Anschlussabschnittes definiert. Figur 3 zeigt eine solche Anwendung des Kabeltragsegmentverbinders 1 bei dem der Seitenholm 2 zur Vergrößerung der Weite des Anschlussabschnittes 9 eingerichtet ist. Das Ende eines weiteren Kabeltragsegmentes greift mit seinen Seitenholmen in diese Aufnahme ein, die durch den den Einrichteabschnitt 5 bildenden Teil des Seitenholms 2 in Längsrichtung begrenzt ist.

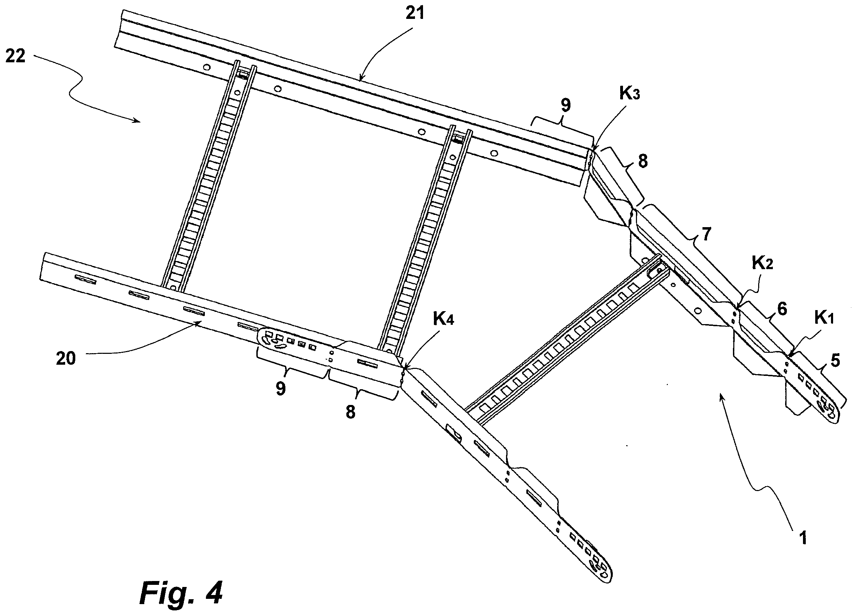

Figur 4 zeigt ein weiteres Anwendungsbeispiel, bei dem der Kabeltragsegmentverbinder 1 zur Ausbildung eines Winkelstücks eingerichtet ist. Der dem Anschlussabschnitt 9 zugehörige Teil des Seitenholmes 3 ist gegenüber dem benachbarten Teil des Einrichteabschnittes an der die beiden Abschnitte voneinander trennenden Knickstelle K₃ in den Kabelführungsraum hinein erstellt worden. An dem Seitenholm 2 sind dessen Einrichteteilabschnitt sowie dessen Anschlussteilabschnitt an der Knickstelle K₄ aus dem Kabelführungsraum heraus um dieselbe Winkelverstellung abgeknickt. An den Außenseiten der Seitenholme 20, 21 des an den Anschlussabschnitt 9 angeschlossenen Kabeltragsegmentes 22 liegen einerseits der Seitenholm 2 mit seinen dem Anschlussabschnitt 9 und dem Einrichteabschnitt 8 zugehörigen Teilen sowie bezüglich des Seitenholmes 3 der dem Anschlussabschnitt 9 zugehörige Teil an.

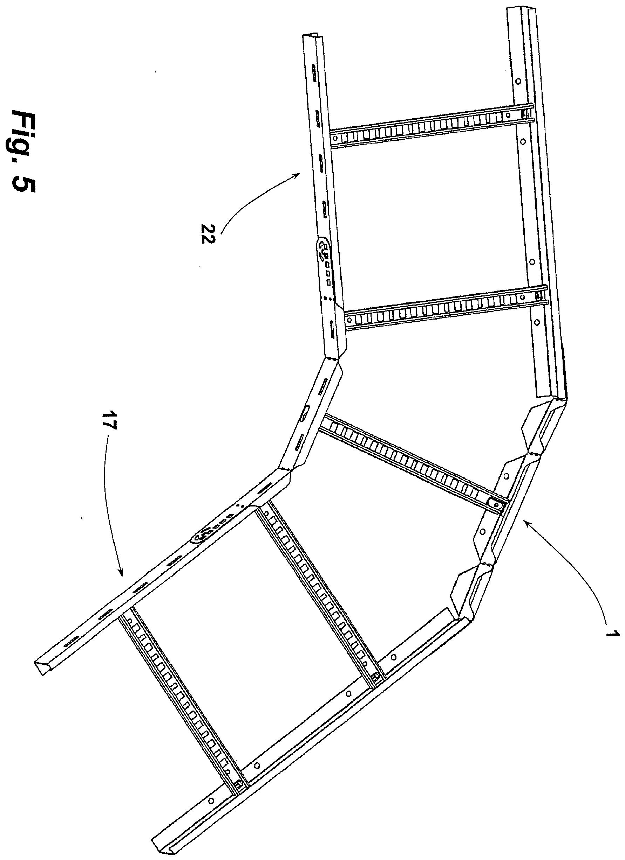

Figur 5 zeigt den Kabeltragsegmentverbinder 1 in einer Bogenausgestaltung. Bezüglich des Anschlusses des Kabeltragsegmentes 22 an den Verbinder 1 ist das Anwendungsbeispiel der Figur 5 ebenso aufgebaut wie das Anwendungsbeispiel der Figur 4. Von dem Anwendungsbeispiel der Figur 4 unterscheidet sich dasjenige der Figur 4 lediglich dadurch, dass auch der Anschluss an das Kabeltragsegment 17 entsprechend ausgeführt ist wie der Anschluss an das Kabeltragsegment 22. Insofern werden durch den Verbinder 1 bei dieser Anwendung zwei Winkelstücke zur Ausbildung eines Bogens miteinander vereint.

Einsetzen lässt sich der Kabeltragsegmentverbinder 1 auch zum Anschließen eines hinsichtlich seiner Breite größeren Kabeltragsegmentes 23 an die Außenseite eines weiteren Kabeltragsegmentes 24. Zum Anschluss an das Kabeltragsegment 24 werden die dem einen Anschlussabschnitt zugehörigen Teile der Seitenholme 2, 3 ebenso wie die dem Einrichteabschnitt zugehörigen Teile um 45° Grad nach außen ausgestellt. Durch diese Maßnahme wird eine Eckbildung vermieden. Der Anschluss des Kabeltragsegmentes 23 an den Kabeltragsegmentverbinder 1 erfolgt in der zu Figur 3 beschriebenen Art und Weise.

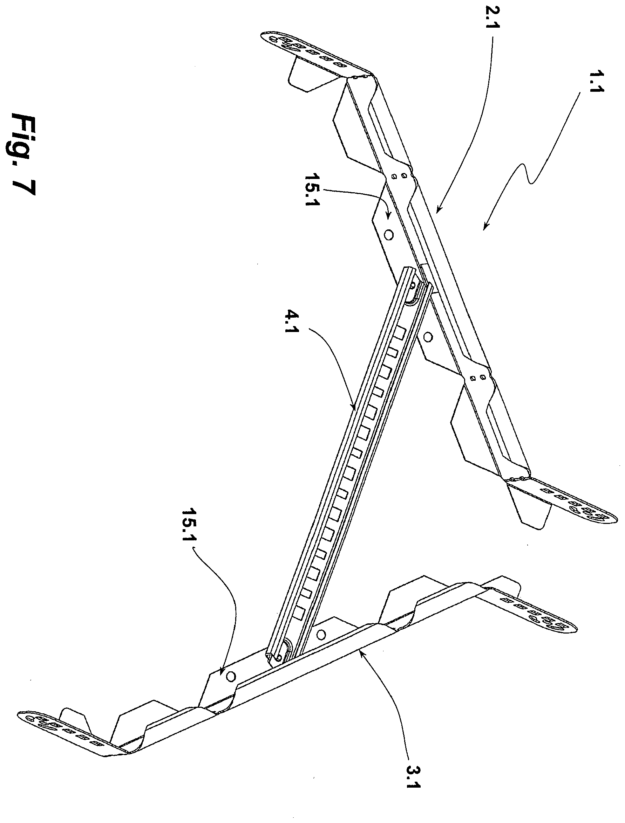

Figur 7 zeigt einen Kabeltragsegmentverbinder 1.1 gemäß einer weiteren Ausgestaltung. Dieser ist prinzipiell genauso aufgebaut wie der Kabeltragsegmentverbinder 1, wie dieser zu den vorstehenden Figuren beschrieben ist. Somit gelten die diesbezüglichen Ausführungen auch für das Kabeltragsegmentverbinder 1.1, soweit nicht nachstehend dieser anders beschrieben ist. Der Kabeltragsegmentverbinder 1.1 unterscheidet sich von dem Kabeltragsegmentverbinder 1 nur dadurch, dass dessen Sprosse 4.1 an den Flanschen 15.1 der Seitenholme 2.1 bzw. 3.1 schwenkbar befestigt sind, typischerweise mittels eine Niet. Dieses ermöglicht eine Ausbildung, bei der die Seitenholme 2.1, 2.3 im Bereich des Tragabschnittes nicht mehr parallel zueinander verlaufen müssen, sondern beispielsweise geneigt sein können, wie dieses in der Figur 7 gezeigt ist. Durch die gelenkige Anbindung der Sprosse 4.1 an die Seitenholme 2.1, 3.1 wird die Möglichkeit der Variantenvielfalt nochmals vergrößert.

Die Erfindung ist anhand der Figuren an Ausführungsbeispielen beschrieben worden. Diese Ausführungen machen deutlich, dass es für den beanspruchten Kabeltragsegmentverbinder verschiedenste Anwendungen geben kann, was wiederum seine Ausführung als Adapter bzw. Anpassungselement, und zwar ausgeführt als eigenständiges Segment eines Kabeltragsystems unterstreicht. Für einen Fachmann ergeben sich im Umfange der geltenden Ansprüche zahlreiche weitere Ausgestaltungen, die Erfindung zu verwirklichen.

### Bezugszeichenliste

- 1: Kabeltragsegmentverbinder
- 2, 2.1: Seitenholm
- 3, 3.1: Seitenholm
- 4, 4.1: Sprosse
- 5: Anschlussabschnitt
- 6: Einrichteabschnitt
- 7: Tragabschnitt
- 8: Einrichteabschnitt
- 9: Anschlussabschnitt
- 10: Lochraster
- 11: Flansch
- 12: Flansch
- 13: Auge
- 14: Lochreihe
- 15: Flansch
- 16: Auge
- 17: Kabeltragsegment
- 18: Seitenholm
- 19: Seitenholm
- 20: Seitenholm
- 21: Seitenholm
- 22: Kabeltragsegment
- 23: Kabeltragsegment
- 24: Kabeltragsegment
- K₁: Knickstelle
- K₂: Knickstelle
- K₃: Knickstelle
- K₄: Knickstelle

## Patentansprüche

1. Kabeltragsegmentverbinder (1, 1.1), welcher als Adapter für ein Kabeltragsystem ausgeführt ist und mittels dieses Verbinders Kabeltragsegmente unterschiedlicher Breite durch diesen Adapter miteinander verbindbar sind und wenigstens vier, jeweils einen rechten und einen linken Seitenholm (2, 3; 2.1, 3.1) umfassende, in Verlaufsrichtung des Verbinders (1, 1.1) angeordnete Abschnitte aufweist, von denen
- ein erster Abschnitt als erster Anschlussabschnitt (5) zum mechanischen Anschließen des Verbinders (1, 1.1) an ein erstes Kabeltragsegment (17),
- ein zweiter Abschnitt als zweiter Anschlussabschnitt (9) zum mechanischen Anschließen des Verbinders (1, 1.1) an ein zweites Kabeltragsegment (22, 23, 24), und
- ein dritter, zwischen den beiden Anschlussabschnitten (5, 9) befindlicher Abschnitt als Tragabschnitt (7) zum Tragen von über den Verbinder (1, 1.1) geführter Installation, insbesondere von über den Verbinder (1, 1.1) geführten Kabeln, ausgeführt ist, wobei der Tragabschnitt (7) über ein die beiden Seitenholme (2, 3; 2.1, 3.1) verbindendes Bauteil (4, 4.1) verfügt, und
- ein vierter, zwischen dem Tragabschnitt (7) und einem der beiden Anschlussabschnitte (5, 9) angeordneter Abschnitt als Einrichteabschnitt (6, 8) zum Anpassen des hierzu benachbarten Anschlussabschnitts (5 bzw. 9) an die Anschlussgeometrie des an den Verbinder (1, 1.1) anzuschließenden Kabeltragsegmentes (17, 22, 23, 24) ausgeführt ist,
**dadurch gekennzeichnet,**
- **dass** in die Seitenholme der Anschlussabschnitte (5, 9) eine Lochung zum Durchführen von Befestigern für einen mechanischen Anschluss des Verbinders an das daran anzuschließende Kabeltragsegment (17, 22, 23, 24) eingebracht ist oder die Seitenholme der Anschlussabschnitte Rasten und/oder Riegel zum werkzeuglosen Anschließen eines mit komplementären Riegeln und/oder Rasten in seinem Verbindungsabschnitt ausgestatteten Kabeltragsegmentes tragen
- **dass** der Einrichteabschnitt (6, 8) zum benachbarten Anschlussabschnitt (5, 9) und zum benachbarten Tragabschnitt (7) durch eine durch eine Materialschwächung definierte Knickstelle (K1, K2, K3, K4) in den Seitenholmen (2, 3, 2.1, 3.1) begrenzt ist und
- **dass** der linke und der rechte Seitenholm (2, 3; 2.1, 3.1) identisch aufgebaut sind.

2. Verbinder nach Anspruch 1, **dadurch gekennzeichnet, dass** der Tragabschnitt (7) ein die beiden Seitenholme (2, 3; 2.1, 3.1) verbindendes Bodenteil (4, 4.1) aufweist.

3. Verbinder nach Anspruch 2, **dadurch gekennzeichnet, dass** das Bodenteil als Sprosse (4, 4.1) ausgeführt ist.

4. Verbinder nach Anspruch 2 oder 3, **dadurch gekennzeichnet, dass** die Seitenholme (2, 3; 2.1, 3.1) im Bereich des Tragabschnittes (7) an ihrem unteren Abschluss jeweils einen zu dem jeweilig anderen Seitenholm (2, 2.1) abragenden Flansch (15, 15.1) tragen.

5. Verbinder nach Anspruch 4, **dadurch gekennzeichnet, dass** das Bodenteil (4, 4.1) an den Flanschen (15, 15.1) des Tragabschnittes (7) befestigt ist.

6. Verbinder nach einem der Ansprüche 1 - 5, **dadurch gekennzeichnet, dass** innerhalb des Einrichteabschnittes ein oder mehrere weitere, durch eine Materialschwächung in wenigstens einem Seitenholm definierte Knickstellen vorgesehen sind.

7. Verbinder nach Anspruch 6, **dadurch gekennzeichnet, dass** die Materialschwächung zum Definieren der Knickstellen (K₁, K₂, K₃, K₄) als eine Lochung, typischerweise als Lochreihe (14) ausgeführt, bereitgestellt ist.

8. Verbinder nach einem der Ansprüche 1 bis 7, **dadurch gekennzeichnet, dass** die Seitenholme (2, 3, 2.1, 3.1) des Verbinders (1, 1.1) im Bereich der Anschlussabschnitte (5, 9) und/oder des Einrichteabschnittes (6, 8) an ihrem unteren Abschluss jeweils einen zum jeweilig anderen Seitenholm abragenden Flansch (11, 12) tragen.

9. Verbinder nach einem der Ansprüche 1 bis 8, **dadurch gekennzeichnet, dass** die Seitenholme (2, 3; 2.1, 3.1) in einem oder in mehreren Abschnitten an ihrem oberen Abschluss ein Auge (13, 16) aufweisen.

10. Verbinder nach einem der Ansprüche 1 bis 9, **dadurch gekennzeichnet, dass** zwischen dem zweiten Anschlussabschnitt (9) und dem Tragabschnitt (7) ein weiterer Einrichteabschnitt (8) angeordnet ist.

## Claims

1. Cable support segment connector (1, 1.1), which is configured as an adapter for a cable support system, and by means of this connector cable support segments of different widths can be connected to one another by means of this connector, and comprises at least four sections comprising in each case a right-hand and a left-hand side spar (2, 3; 2.1, 3.1), arranged in the direction of run of the connector (1, 1.1), of which
- a first section is configured as a first connection section (5) for the mechanical connection of the connector (1, 1.1) to a first cable support segment (17),
- a second section as a second connection section (9) for the mechanical connection of the connector (1, 1.1) to a second cable support segment (22, 23, 24), and
- a third section, located between the two connection sections (5, 9), as a support section (7) for supporting an installation guided by way of the connector (1, 1.1), in particular cables guided by way of the connector (1, 1.1), wherein the support section (7) is provided with a component (4, 4.1) connecting the two side spars (2, 3; 2.1, 3.1), and
- a fourth section, arranged between the support section (7) and one of the two connection sections (5, 9), as an adjustment section (6, 8) for the adjustment of the adjacent connection section (5 or 9 respectively) to the connection geometry of the cable support segment (17, 22, 23 24) which is to be connected to the connector (1, 1.1),
**characterised in that**
- a perforation is introduced into the side spars of the connection sections (5, 9) for passing through securing elements for a mechanical connection of the connector to the cable support segment (17, 22, 23, 24) which is to be connected to it, or the side spars of the connection sections carry notches and/or interlock elements for the connection without the need for tools of a cable support segment fitted with complementary interlock elements and/or notches,
- that the adjustment section (6, 8) is delimited towards the adjacent connection section (5, 9) and to the adjacent support section (7) by a fold point (K1, K2, K3, K4), defined by a material weakening, in the side spars (2, 3, 2.1, 3.1), and
- that the left and right side spars (2, 3; 2.1, 3.1) are of identical structural design.

2. Connector according to claim 1, **characterised in that** the support section (7) comprises a base part (4, 4.1) connecting the two side spars (2, 3; 2.1, 3.1).

3. Connector according to claim 2, **characterised in that** the base part is configured as a connecting bar or rung (4, 4.1).

4. Connector according to claim 2 or 3, **characterised in that** the side spars (2, 3; 2.1, 3.1) support, in the region of the support section (7), at their lower termination region, in each case a flange (15, 15.1) projecting to the respective other side spar (2, 2.1).

5. Connector according to claim 4, **characterised in that** the base part (4, 4.1) is secured to the flanges (15, 15.1) of the support section (7).

6. Connector according to any one of claims 1-5, **characterised in that** provided inside the adjustment section are one or more further fold points, defined by a material weakening in at least one side spar.

7. Connector according to claim 6, **characterised in that** the material weakening for defining the fold points (K₁, K₂, K₃, K₄) is provided as a perforation, typically as a row of holes (14).

8. Connector according to any one of claims 1 to 7, **characterised in that** the side spars (2, 3, 2.1, 3.1) of the connector (1, 1.1) in each case support in the region of the connection sections (5, 9) and/or of the adjustment section (6, 8), at their lower termination region, a flange (11, 12), projecting towards the respective other side spar.

9. Connector according to any one of claims 1 to 8, **characterised in that** the side spars (2, 3; 2.1, 3.1) comprise an eye (13, 16) in one or more sections at their upper termination region.

10. Connector according to any one of claims 1 to 9, **characterised in that** a further adjustment section (8) is arranged between the second connection section (9) and the support section (7).

## Revendications

1. Connecteur (1, 1.1) de segment de support de câbles conçu en tant qu'adaptateur pour un système de support de câbles et grâce auquel connecteur il est possible de raccorder entre eux, au moyen de cet adaptateur, des segments de support de câbles de largeur différente et présentant au moins quatre tronçons disposés dans le sens de cheminement du connecteur (1, 1.1) enserrant respectivement un montant latéral (2, 3 ; 2.1, 3.1) à droite et à gauche dont
- un premier tronçon en tant que premier tronçon de raccordement (5) destiné à raccorder mécaniquement le connecteur (1, 1.1) à un premier segment (17) de support de câbles,
- un second tronçon en tant que second tronçon de raccordement (9) destiné à raccorder mécaniquement le connecteur (1, 1.1) à un second segment (22, 23, 24) de support de câbles, et
- un troisième tronçon, situé entre les deux tronçons de raccordement (5, 9), conformé en tant que tronçon de support (7) destiné à supporter l'installation guidée au-dessus des connecteurs (1, 1.1), notamment des câbles guidés au-dessus des connecteurs (1, 1.1), le tronçon de support (7) disposant d'une pièce (4, 4.1) reliant les deux montants latéraux (2, 3 ; 2.1, 3.1)
- un quatrième tronçon, disposé entre le tronçon de support (7) et l'un des deux tronçons de raccordement (5, 9), conformé en tant que tronçon d'ajustage (6, 8) permettant d'ajuster le tronçon de raccordement (5 ou 9) qui lui est adjacent à la géométrie de raccordement du segment (17, 22, 23, 24) de support de câbles à raccorder au connecteur (1, 1.1), **caractérisé en ce que**,
- sur les montants latéraux des tronçons de raccordement (5, 9) est aménagée une perforation pour y faire passer des fixations pour raccorder mécaniquement le connecteur sur le segment (17, 22, 23, 24) de support de câbles qui doit y être raccordé ou que les montants latéraux des tronçons de raccordement comportent des clips et/ou des verrous permettant un raccordement sans outils d'un segment de support de câbles comportant des verrous et/ou des clips complémentaires sur son tronçon de raccordement
- le tronçon d'ajustage (6, 8) qui donne sur le tronçon de raccordement (5, 9) adjacent et sur le tronçon de support (7) adjacent est limité par une zone de pliage (K1, K2, K3, K4) dans les montants latéraux (2, 3 ; 2.1, 3.1), définie par un affaiblissement du matériau et
- les montants latéraux (2, 3 ; 2.1, 3.1) à gauche et à droite sont configurés de façon identique.

2. Connecteur selon la revendication 1, **caractérisé en ce que** le tronçon de support (7) présente une pièce de fond (4, 4.1) qui relie les deux montants latéraux (2, 3 ; 2.1, 3.1).

3. Connecteur selon la revendication 2, **caractérisé en ce que** la pièce de fond est conformée en échelon (4, 4.1).

4. Connecteur selon la revendication 2 ou 3, **caractérisé en ce que** les montants latéraux (2, 3 ; 2.1, 3.1) supportent dans la zone du tronçon de support (7), à leur extrémité inférieure, respectivement une bride (15, 15.1) en saillie vers l'autre montant latéral (2, 2.1).

5. Connecteur selon la revendication 4, **caractérisé en ce que** la pièce de fond (4, 4.1) est fixée aux brides (15, 15.1) du tronçon de support (7).

6. Connecteur selon l'une des revendications 1 à 5, **caractérisé en ce que**, à l'intérieur du tronçon d'ajustage, il est prévu dans au moins un montant latéral une ou plusieurs zones de pliage définies par un affaiblissement du matériau.

7. Connecteur selon la revendication 6, **caractérisé en ce que** l'affaiblissement du matériau destinée à définir les zones de pliage (K₁, K₂, K₃, K₄) est mis à disposition en tant que perforation, typiquement en tant que rangée de perforations (14).

8. Connecteur selon l'une des revendications 1 à 7, **caractérisé en ce que** les montants latéraux (2, 3 ; 2.1, 3.1) du connecteur (1, 1.1) supportent, dans la zone des tronçons de raccordement (5, 9) et/ou du tronçon d'ajustage (6, 8), à leur extrémité inférieure, respectivement une bride (11, 12) en saillie vers l'autre montant latéral.

9. Connecteur selon l'une des revendications 1 à 8, **caractérisé en ce que** les montants latéraux (2, 3 ; 2.1, 3.1) présentent dans un ou plusieurs tronçons, sur leur extrémité supérieure, un oeil (13, 16).

10. Connecteur selon l'une des revendications 1 à 9, **caractérisé en ce qu'**un autre tronçon d'ajustage (8) est disposé entre le second tronçon de raccordement (9) et le tronçon de support (7).
